# EUROPEAN PATENT APPLICATION

(11) **EP 0 959 000 A1**
(43) Date of publication of application: **24.11.1999**
(21) Application number: 99500030.4
(22) Date of filing: 23.02.1999
(51) Int. Cl.: B64C 30/00, B64C 29/00

(54) **Lift enhancing and drag reducing device for aircraft**

(30) Priority: 10.03.1998 ES 9800511
(71) Applicant: Munoz Saiz, Manuel, E-28017 Madrid (ES)
(72) Inventor: Munoz Saiz, Manuel, E-28017 Madrid (ES)

(57) **Abstract**

The device for lift and to reduce forward resistance of aircraft consists of a converging input duct of truncated-cone-shaped or truncated-pyramid-shaped, arranged lengthwise inside the fuselage and inclined to the longitudinal axis, with the larger opening coinciding with the front fuselage contour or periphery of maximum cross-section, and reducing in bore backwards so that its generatrix or lower side coincides with the lower surface of the fuselage parallel to the aircraft's longitudinal axis and the generatrix or upper edge forms an acute angle with the aircraft's longitudinal axis. The narrowest end of the duct discharges into the input of the turbofan, UHD, etc. type drive engines which discharge through a rear outlet duct facing backwards with the rear end curved slightly downward.

## Description

TECHNICAL FIELD.- The present invention relates to aircrafts that use big longitudinally extending intake ducts, and more specifically relates to vertical and short takeoff and landing aircrafts.

BACKGROUND ART.- This invention is a continuation of Spanish Patents Nº P9601904 and P9701753 entitled: IMPROVEMENT TO AIRCRAFT AND HIGH SPEED VEHICLES, which take adventage of the frontal inclination of the fuselage in generating lift, combined with existing inner fuselage flow ducting systems which do not produce lift or greatly reduce frontal resistance to forward movement.

DESCRIPTION OF THE INVENTION.- The device for lift and to reduce forward resistance of aircraft consists of a converging input duct of truncated-cone-shaped or truncated-pyramid-shaped, arranged lengthwise inside the fuselage and inclined to the longitudinal axis, with the larger opening coinciding with the front fuselage contour or periphery of maximum cross-section, and reducing in bore backwards so that its generatrix or lower side coincides with the lower surface of the fuselage parallel to the aircraft's longitudinal axis and the generatrix or upper edge forms an acute angle with the aircraft's longitudinal axis. The narrowest end of the duct discharges into the input of the turbofan,UHD, etc. type drive engines which discharge through a rear outlet duct facing backwards with the rear end curved slightly downward. This allows the front cross-section of the fuselage to be very large without raising frontal resistance and perhaps reducing lateral resistance, particularly if length is reduced. It employs very fine wings which provide stability and support the flight controls. Because the engines are in the narrowest part of the duct, destabilisation does not occur if one of the engines stops.

The cockpit is located in front, at the top (10) or at the bottom.

On short aircraft, the output duct (7) is curved to coincide with the downward flow output (8) in the tail cone.

The ducting (5) and (8) and turbines can be of approximately the same inclination, Fig . 6.

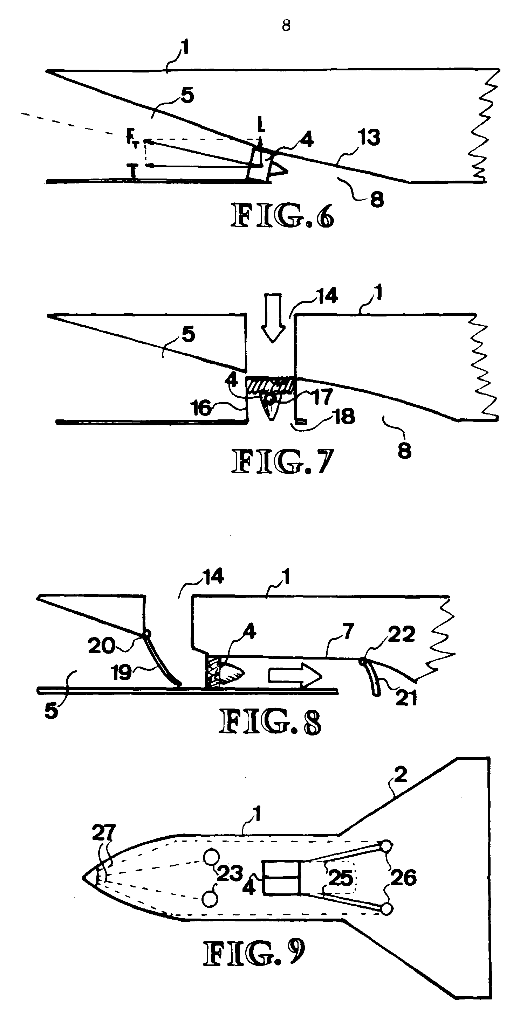

One variant adds engines which rotate in relation to the aircraft's transverse axis (4). Fig. 7.

A further variant adds a fin (19) in the input duct and another at the outlet (21) to direct the input and output flow vertically.

Two valves in the top of the input duct (23) or two on the sides of the bottom part of the output duct (26) are operated by controls or actuators automatically controlled by gyroscopes.

The lower part of the nose may be slightly set back, to facilitate vision when the cockpit is located above.

Front lift can be considered a consequence of the impact of the air on the inclined frontal surface or because frontal suction is inclined.

In general, the intensities of the suction and impulsión forces must each be of a level and must be suitably located in relation to the centre of gravity to produce even and stable aircraft lift. They can also be controlled in-flight.

The tail area may add the lift improvements in the Spanish patents mentioned above.

Advantages: lift is generated and frontal resistance is reduced throughout flight, and vertical flight is possible.

These valves also counteract the lift difference between the input and output openings.

The lower surface of the input can be eliminated, leaving the duct open at the bottom.

### BRIEF DESCRIPTION OF THE DRAWINGS

Figure 1 shows a side, partial, schematic, cross-section view of the device in the invention.
Figure 2 shows a top, partial, schematic, cross-section view of the preceding device.
Figure 3 and 4 show front views of two different devices.
Figure 5 to figure 8 show side, partial, schematic, cross-section views of different variants.
Figure 9 shows a top, schematic view, a balance device.

### MORE DETAIL DESCRIPTION OF THE DRAWINGS

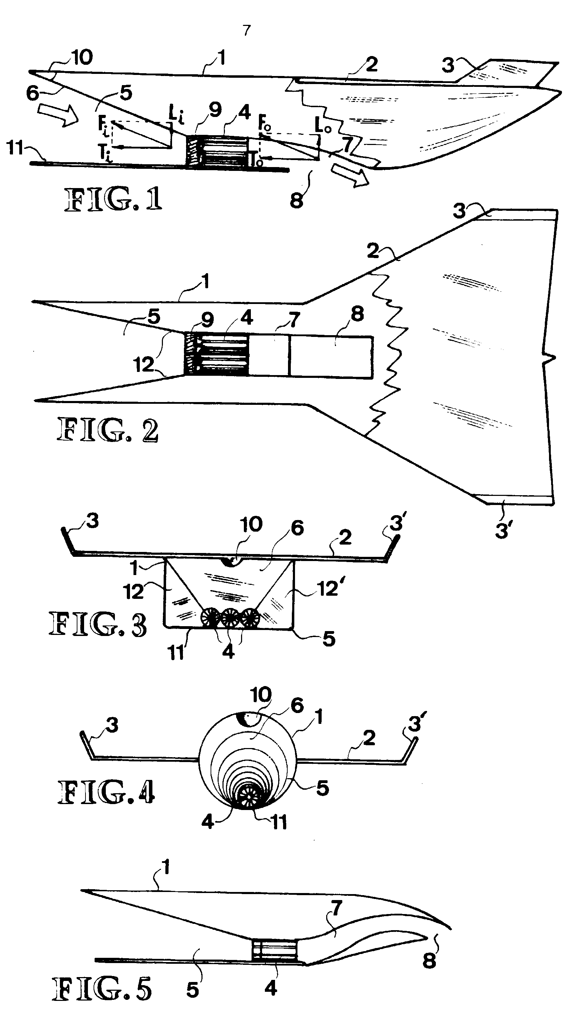

Figure 1 consists of the fuselage 1, the wings 2, the fins or rudders 3, the engines 4, the air flow inlet duct 5, the upper generatrix or side of the duct 6, the outlet duct 7, the outlet port 8, the fan 9, the cockpit 10 and the generatrix or lower side of the inlet duct 11. Where Fᵢ is the total force applied to the airflow at the inlet duct, Lᵢ is the lift and Tᵢ its thrust, Fₒ is the total force applied to the airflow at the outlet duct, L₀ its lift, and Tₒ its thrust. This arrangement produces constant lift and eliminates the frontal resistance during the flight.

Figure 2 consists of the fuselage 1, the wings 2, the fins, rudders or elevators 3 and 3', the engines 4, the airflow inlet duct 5, the outlet duct 7, the outlet port 8, the fan 9 and the side walls of the inlet duct 12.

Figure 3 consists of the fuselage 1, the wings 2, the fins, rudders or elevators 3 and 3', the engines 4, the airflow inlet duct 5, the inclined upper surface 6, the cockpit 10, the lower surface of the inlet duct 11 and the side walls of the inlet duct 12 and 12'. It uses a truncated-pyramid-shaped inlet duct. The lower surface of the inlet duct and the adjacent surface of the fuselage can be eliminated, leaving the duct open at the bottom.

Figure 4 consists of the fuselage 1, the wings 2, the fins, rudders or elevators 3 and 3', the engine 4, the airflow inlet duct 5, the upper inclined generatrix 6, the cockpit 10 and the lower generatrix of the inlet duct 11. It uses a truncated-cone-shaped inlet duct.

Figure 5 consists of the fuselage 1, the engines 4, the inlet duct 5, the outlet duct 7 and the outlet port of the tail cone 8.

Figure 6 consists of the fuselage 1, the engines 4, the inlet duct 5, and the upper surface of the outlet duct 13 and the outlet port 8. It uses inclined and aligned ducting and turbines. F_{T} is the total impulsion force, T the total thrust and L the total lift.

Figure 7 consists of the fuselage 1, the rotating engines 4, the inlet duct 5, the outlet port 8, the upper inlet 14, the engine fairing 16, the rotating shaft of the engine 17 and the lower outlet port 18. It is typical for vertical take off.

Figure 8 consists of the fuselage 1, the engines 4, the inlet duct 5, the outlet duct 7, the upper inlet 14, the deflecting fin of the outlet airflow 21 and its rotating shaft 22. It is typical for vertical take off.

Figure 9 consists of the fuselage 1, the wings 2, the engines 4, the valves on the upper surface of the inlet duct 23, the ductings 25 to send the air toward the outlet air valves 26 on lower surface of the wing or fuselage and the transmision 27 of the control signal toward said valves. This valves also counteract the difference of lift between the inlet and outlet ports.

The arrows indicate the gas or airflow.

## Claims

1. A device for lift and to reduce resistance to aircraft advance that consists of a converging input duct, arranged lengthwise inside the fuselage and inclined to the longitudinal axis, with the larger opening coinciding with the front fuselage contour or periphery of maximum cross-section, and reducing in bore backwards so that its generatrix or lower side coincides with the lower surface of the fuselage parallel to the aircraft's longitudinal axis and the generatrix or upper edge forms an acute angle with the aircraft's longitudinal axis, the narrowest end of the duct discharges into the input of the turbofan, UHD type drive engines which discharge through a rear outlet duct facing backwards with the rear end curved slightly downward, it employs very fine wings which provide stability and support the flight controls.

2. A device for lift and to reduce resistance to aircraft advance according to claim 1, wherein it uses a truncated-pyramid-shaped inlet duct,

3. A device for lift and to reduce resistance to aircraft advance according to claim 1, wherein it uses a truncated-cone-shaped inlet duct.

4. A device for lift and to reduce resistance to aircraft advance according to claim 1, wherein the cockpit is located in front, at the top.

5. A device for lift and to reduce resistance to aircraft advance according to claim 1, wherein on short aircraft, the output duct is curved to coincide with the downward flow output in the tail cone.

6. A device for lift and to reduce resistance to aircraft advance according to claim 1, wherein the ducting and turbines have approximately the same inclination.

7. A device for lift and to reduce resistance to aircraft advance according to claim 1, wherein it adds engines which rotate in relation to the aircraft's transverse axis.

8. A device for lift and to reduce resistance to aircraft advance according to claim 1, wherein it adds a fin in the input duct and another at the outlet to direct the input and output flow vertically.

9. A device for lift and to reduce resistance to aircraft advance according to claim 1, wherein two valves in the top of the input duct and two on the sides of the bottom part of the output duct, that are operated by controls and by actuators automatically controlled by gyroscopes.

10. A device for lift and to reduce resistance to aircraft advance according to claim 1, wherein the lower part of the nose is slightly set back.

11. A device for lift and to reduce resistance to aircraft advance according to claim 1, wherein the lower surface of the inlet duct and the adjacent surface of the fuselage are eliminated, leaving the duct open at the bottom.
